# EUROPÄISCHE PATENTSCHRIFT

(11) **EP 0 594 998 B1**
(45) Veröffentlichungstag und Bekanntmachung des Hinweises auf die Patenterteilung: **08.11.1995**
(21) Anmeldenummer: 93114647.6
(22) Anmeldetag: 13.09.1993
(51) Int. Cl.: B60T 15/18

(54) **Relaisventil, insbesondere Anhängersteuer- oder Anhängerbremsventil für Druckluftbremsanlage an Kraftfahrzeugen**
Relay valve especially trailer brake or trailer control valve for pneumatic vehicle brake systems
Valve relais en particulier valve de contrôle ou commande pour remorques pour systèmes pneumatiques de freinage de véhicules

(30) Priorität: 28.10.1992 DE 4236392
(43) Veröffentlichungstag der Anmeldung: 04.05.1994
(73) Patentinhaber: GRAU GMBH, D-69123 Heidelberg (DE)
(72) Erfinder: Schäfer, Günter, D-69126 Heidelberg (DE)
(74) Vertreter: Rehberg, Elmar, Dipl.-Ing.

(56) Entgegenhaltungen:
- EP-A- 0 407 751
- EP-A- 0 411 355
- DE-A- 2 246 242

## Beschreibung

Die Erfindung bezieht sich auf ein mindestens einkreisig ansteuerbares, als Anhängersteuer- oder Anhängerbremsventil einsetzbares Relaisventil, insbesondere für Druckluftbremsanlagen an Kraftfahrzeugen, mit mindestens einem Steuerkolben und einem daran oder an einem separaten Kolben angeordneten ersten, eine erste Rückwirkkraft auf den Steuerkolben bereitstellende Rückwirkfläche, auf die der ausgesteuerte Druck der Bremskammer einwirkt, mit einer zweiten, an einem Rückwirkkolben angeordneten Rückwirkfläche, der zur Bereitstellung eines ersten Knickpunkts A der Kennlinie des Relaisventils eine gehäuseseitig abgestützte Rückhaltefeder zugeordnet ist, wobei zwischen Steuerkolben und Rückwirkkolben einen Hub gestattende mechanische Anschläge vorgesehen sind. Dabei ist es in der Regel so, daß das Anhängersteuerventil meist zweikreisig ansteuerbar ist, während das Anhängerbremsventil meist einkreisig ansteuerbar ist.

Ein Relaisventil der eingangs beschriebenen Art in der Ausbildung als zweikreisig ansteuerbares Anhängersteuerventil ist aus der DE-OS 22 46 242 bekannt. Das Relaisventil weist zwei gleichsinnig betätigbare, im Gehäuse des Relaisventils abgedichtet verschiebbar nebeneinander gelagerte Steuerkolben auf. Es ist ein separater Kolben vorgesehen, der über Anschläge einerseits an dem einen Steuerkolben anliegt und andererseits ein einen Auslaßsitz bildenden Fortsatz trägt, der zusammen mit einem federnd aufgehängten Doppelventilkörper ein Auslaßventil bildet. Der federnd aufgehängte Doppelventilkörper teilt im Gehäuse des Relaisventils eine Vorratskammer ab, die in dauernder Verbindung mit einem Druckluftvorrat steht. In diesem separaten Kolben wird eine erste Rückwirkfläche gebildet. Diese Rückwirkfläche bildet einen Teil der Begrenzungswand der Bremskammer und wird somit dauernd vom angesteuerten Druck in der Bremskammer beaufschlagt, so daß bei Beaufschlagung eine erste Rückwirkkraft auf den Steuerkolben zur Erzielung von Abschlußstellungen einwirkt. Es ist ein Rückwirkkolben vorgesehen, der eine zweite Rückwirkfläche bereitstellt, die ebenfalls Bestandteil der die Bremskammer einschließenden Wandung ist, so daß auch auf die zweite Rückwirkfläche der ausgesteuerte Druck kontinuierlich einwirkt. Entgegen der Einwirkrichtung des ausgesteuerten Drucks ist dieser Rückwirkkolben von einer in ihrer Vorspannkraft einstellbaren Rückhaltefeder belastet, die sich andererseits am Gehäuse des Relaisventils abstützt. In Verbindung mit einer Gewindestange kann damit die Vorspannkraft der Rückhaltefeder für den Rückwirkkolben eingestellt bzw. verändert werden. Zwischen dem Kolben bzw. dem Steuerkolben und dem Rückwirkkolben sind einen Hub gestattende mechanische Anschläge vorgesehen. Das Aufeinandertreffen der Anschläge bewirkt eine mechanische Abstützung des Rückwirkkolbens an dem Steuerkolben. Dieses bekannte Relaisventil besitzt eine Kennlinie des ausgesteuerten Drucks über dem eingesteuerten Druck, die zwei stufbare Bereiche aufweist, die durch einen Knickpunkt voneinander getrennt sind. Der erste stufbare Bereich erstreckt sich von der Abszisse schräg geneigt aufwärts bis zum Erreichen des Knickpunkts. Der zweite stufbare Bereich besteht wiederum aus einem geraden Stück, jedoch mit verringerter Steigung, und schließt sich an den Knickpunkt bis hin zum maximalen eingesteuerten Druck an. Je nach der Einstellung der Rückhaltefeder wird die Lage des Knickpunkts auf der den ersten stufbaren Bereich wiedergebenden Geraden mehr oder weniger schräg nach oben verstellt, wobei damit eine Verstellung der Voreilung eintritt. Die Voreilung wird parallel zur Ordinate gemessen und kann auf eine Grundeinstellung bezogen sein.

Aus der DE-PS 37 22 306 ist ein ähnliches Relaisventil bekannt, welches jedoch lediglich eine an einem separaten Kolben verwirklichte Rückwirkfläche aufweist, wobei der Kolben gehäuseseitig an einer einstellbaren Voreilfeder abgestützt ist. Außerdem ist an dem einen Steuerkolben eine weitere Rückwirkfläche gebildet, deren Rückwirkkammer über eine Verbindungsleitung an die Bremskammer angeschlossen ist. In dieser Verbindungsleitung ist ein Druckrückhalteventil vorgesehen, welches als Doppelrückschlagventil ausgebildet ist. Die Rückhaltekraft der den Ventilkörper des Druckrückhalteventils beaufschlagenden Feder ist einstellbar. Damit läßt sich die Kennlinie des ansteigenden Bremsdrucks relativ zur Kennlinie des abfallenden Bremsdrucks einstellen, beispielsweise um beide Kennlinien zur Deckung zu bringen oder in eine gewünschte Relativlage zueinander. Es entsteht jedoch auch hier nur eine Kennlinie mit einem einzigen Knickpunkt und bei entsprechender Auslegung der Voreil- bzw. Rückhaltefeder zwei stufbare, über den Knickpunkt aneinander anschließende Bereiche der Kennlinie.

Aus der DE 30 33 620 A1 ist ein einkreisig ansteuerbares Anhängersteuerventil bekannt, bei dem neben dem Steuerkolben ein separater Rückwirkkolben vorgesehen ist, der gehäuseseitig über Rückhaltefedern entgegen der vom Druck in der Bremskammer auf ihn einwirkenden Kraft abgestützt ist. Zwischen Steuerkolben und Rückwirkkolben sind Anschläge gebildet, über die der Rückwirkkolben nach entsprechender Zusammendrückung der Rückhaltefedern an dem Steuerkolben zur Anlage kommt. Obwohl der Rückwirkkolben mit vergleichsweise großer Rückwirkfläche ausgestattet ist, wird eine Rückhaltekraft im Bereich eines kleinen, eingesteuerten Steuerdrucks zunächst von dem Steuerkolben ferngehalten, so daß sich hier die Kennlinie aus einem ersten, bis zum einen Knickpunkt führenden Bereich zusammensetzt, der nicht stufbar ausgebildet ist. Der Knickpunkt wird erreicht, wenn der Rückwirkkolben an dem Steuerkolben anschlägt, so daß dann eine entsprechende Druckuntersetzung stattfindet und damit die Kennlinie ihren zweiten Bereich vom Knickpunkt bis zum maximal eingesteuerten Steuerdruck bekommt, der im Gegensatz zum ersten Bereich stufbar ist.

Der Erfindung liegt die Aufgabe zugrunde, ein Relaisventil der eingangs beschriebenen Art bereitzustellen, welches die Realisierung einer stärker gekrümmten Kennlinie aus stufbaren Bereichen ermöglicht. Darüberhinaus soll die Möglichkeit gegeben sein, ein derart stark gekrümmtes Abbremsungsband zu erreichen und in mehreren Bereichen der Kennlinie eine gleiche oder angenähert gleiche Voreilung gegenüber einer Grundeinstellung zu ermöglichen.

Erfindungsgemäß wird dies in Verbindung mit den im Oberbegriff des Anspruchs 1 angeführten Merkmalen dadurch erreicht, daß zur Bereitstellung eines zweiten Knickpunkts B der Kennlinie des Relaisventils der zweiten Rückwirkfläche zugeordnet eine Übertragungsfeder zwischen Steuerkolben und Rückwirkkolben vorgesehen ist, die sich erst mit dem Erreichen des ersten Knickpunkts A an dem Steuerkolben abstützt und deren Zusammendrückung durch das Aufeinandertreffen der Anschläge begrenzt ist.

Damit läßt sich insgesamt angenähert eine stark gekrümmte Kennlinie des Relaisventils verwirklichen, bei der drei gerade Kurvenstücke unter Einschluß von zwei Knickpunkten aneinander anschließen, wobei im Sinne steigenden eingesteuerten Drucks die Steigung der Bereiche jeweils abnimmt. Sämtliche drei Bereiche sind stufbar ausgebildet, d. h. eine geringfügige Veränderung des eingesteuerten Drucks führt jeweils zu einer Veränderung des ausgesteuerten Drucks.

Obwohl nur zwei Rückwirkfläche insgesamt vorgesehen sind, können dennoch drei gerade Kurvenstücke unter Einschluß der zwei Knickpunkte genutzt werden, wobei die drei geraden Kurvenstücke unterschiedliche Steigung aufweisen. Eine dritte Rückwirkfläche wird vorteilhaft vermieden und es ergeben sich besonders einfache und damit kostengünstige Realisierungsmöglichkeiten für das Relaisventil. Die Übertragungsfeder ist in ihrer Aufgabe und Funktion mit der Rückhaltefeder nicht vergleichbar, obwohl beide Federn auf der gleichen Seite des Rückwirkkolbens angeordnet sind und zunächst einen ähnlichen Eindruck erwecken. Der Übertragungsfeder ist ein möglicher Hub zugeordnet, der zwischen Rückwirkkolben und Steuerkolben ablaufen kann, wobei dieser Hub ohne Einfluß auf die Übertragungsfeder ist, da sie erst nach dem Anliegen an dem Steuerkolben kraftmäßig beaufschlagt wird. Die Übertragungsfeder erfüllt somit bis zum Erreichen des ersten Knickpunkts A keine Funktion. Sie erfüllt ferner keine Funktion nach dem Erreichen des Knickpunkts B im Bereich des dritten geraden Kurvenstücks, weil sie dann gleichsam gefesselt und mit konstanter Zusammendrückung zwischen Steuerkolben und Rückwirkkolben eingeschlossen ist. Die Besonderheit der Übertragungsfeder besteht darin, daß sie letztlich ausschließlich zwischen den beiden Knickpunkten A und B wirksam ist und hier ihre Funktion erfüllt. Sie stellt das zweite gerade Kurvenstück zwischen den Knickpunkten A und B zur Verfügung. Die Rückhaltefeder und/oder die Übertragungsfeder können austauschbar oder in ihrer Vorspannkraft einstellbar ausgebildet sein. Auch die Geometrie der mechanischen Anschläge zueinander und damit die Hübe sind konstruktiv vorwählbar, um z. B. bei Verzicht auf eine Einstellbarkeit Anpassungen an unterschiedliche Fahrzeuge zu ermöglichen. Eine weitere Möglichkeit besteht darin, den beiden Federn Beilagescheiben zuzuordnen, die bei Bedarf eingelegt oder herausgenommen werden können, wenn eine spezielle Anpassung erfolgen soll. Die Verwendung von einstellbaren Federauflagern verteuert zwar die Herstellung etwas, erbringt andererseits aber die Möglichkeit, auch eine Einzelanpassung vornehmen zu können. Durch die damit gegebene Verstellmöglichkeit einmal für die Lage des ersten Knickpunkts und zum anderen für die Lage des zweiten Knickpunkts entweder relativ zur Lage des ersten Knickpunkts oder unabhängig von der Lage des ersten Knickpunkts ergibt sich die Möglichkeit, die Voreilung in zwei mit unterschiedlicher Steigung versehenen Bereichen der Kennlinie trotzdem mit gleichem oder angenähert gleichem Wert einstellen zu können. Gegenüber einer Grundeinstellung des Relaisventils können der sich an den ersten Knickpunkt im Sinne steigender eingesteuerter Drücke anschließende Bereich und der an den zweiten Knickpunkt im Sinn steigender eingesteuerter Drücke anschließende weitere Bereich so eingestellt werden, daß sich über beide Bereiche hinweg eine etwa konstante Voreilung ergibt. Die drei geraden Kurvenstücke der Kennlinie ergeben sich, obwohl nur zwei Rückwirkflächen verwirklicht sind. Für manche Anwendungsfälle kann es auch sinnvoll sein, sowohl den ersten Knickpunkt wie auch den zweiten Knickpunkt unabhängig voneinander einstellbar zu machen.

Der Rückwirkkolben kann im Steuerkolben begrenzt verschiebbar gelagert und dichtend geführt sein, wobei der Steuerkolben einen durchbrochenen Kolbenboden aufweisen kann, an dem ein den Auslaßsitz tragender hohler Fortsatz vorgesehen ist. Damit ist der Rückwirkkolben, der selbst auch hohl ausgebildet ist, geschickt untergebracht. Er besitzt auch auf seinem kleinsten Durchmesser eine Dichtung, durch die eine Verlängerung des den Auslaßsitz tragenden Fortsatzes hindurchreicht. Damit wird gleichzeitig eine Entlüftung für den Raum geschaffen, in dem sowohl die Rückhaltefeder wie auch die Übertragungsfeder vorgesehen ist. Auch der Zwischenraum zwischen dem obersten Steuerkolben und einem Trennkolben kann hier entlüftet sein.

Der Rückwirkkolben kann über den durchbrochenen Kolbenboden des Steuerkolbens gehäuseseitig abgestützt sein. Damit ergibt sich eine definierte Ausgangslage für den Rückwirkkolben und die gehäuseseitige Abstützung der Rückhaltefeder. Zugleich wird eine definierte Ausgangslage für den Steuerkolben geschaffen, so daß auch der freie Hub der Übertragungsfeder damit festgelegt ist.

Die Übertragungsfeder kann vorteilhaft lose zwischen Steuerkolben und Rückwirkkolben eingelegt sein. Sie ist damit innerhalb der Baueinheit aus Steuerkolben und Rückwirkkolben nicht nur geschützt untergebracht, sondern in den bremsfreien Zeiten auch völlig entspannt und entlastet. Durch diese geschickte Unterbringung der Übertragungsfeder besitzt das Relaisventil vorteilhaft auch eine geringe Bauhöhe.

Wenn der oder die Steuerkolben und der Rückwirkkolben als Hohlkolben ausgebildet sind, besteht auch die Möglichkeit, die Rückhaltefeder in einfacher Weise gehäuseseitig abzustützen. Die Rückhaltefeder ragt dann durch die hohlen Seuerkolben hindurch und stützt sich gleichsam am Deckel des Gehäuses des Relaisventils ab, ohne daß eine übermäßig große Steuerfläche an den Steuerkolben verlorengeht. Es ist damit nicht mehr erforderlich, die Rückhaltefeder über eine Spindel im Bereich der Entlüftungsöffnung gehäuseseitig abzustützen.

Die Übertragungsfeder kann aber auch zwischen zwei Teilen des Steuerkolbens vorgesehen sein, wobei der eine bewegliche Teil einen Gegenanschlag für einen einen Hub gestattenden Anschlag des Rückwirkkolbens bildet. Auch hier ist die Übertragungsfeder bevorzugt vorspannungslos eingebaut. Über ein weiteres Anschlagpaar ist sichergestellt, daß die Übertragungsfeder bis zum Erreichen des ersten Knickpunkts keine Wirkung entfaltet.

Das eine Federauflager der Übertragungsfeder kann vorspannungslos verstellbar ausgebildet sein, so daß damit eine Veränderung des Hubs des Rückwirkkolbens einstellbar ist. Dies führt dazu, daß die beiden Knickpunkte der Kennlinie gemeinsam verstellt werden können, wobei eine feste Relation der beiden Knickpunkte zueinander besteht, d. h. das zweite gerade Kurvenstück zwischen den beiden Knickpunkten bleibt bei der Verstellung in seiner Länge und Neigung konstant.

Der Hub zwischen den mechanischen Anschlägen kann verstellbar ausgebildet. Damit ergeben sich verschiedene Möglichkeiten. Eine dieser Möglichkeiten besteht darin, daß der zweite Knickpunkt B relativ zum ersten Knickpunkt A verstellbar bzw. einstellbar ist.

Die Rückwirkfeder und die Übertragungsfeder können koaxial angeordnet sein. Sie sind auf der gleichen Seite des Rückwirkkolbens vorgesehen, sehen sehr ähnlich aus und erfüllen dennoch eine völlig voneinander abweichende jeweilige Funktion.

Die Erfindung wird anhand der Zeichnungen und dort wiedergegebener bevorzugter Ausführungsformen weiter beschrieben und erläutert. Es zeigen:
- Figur 1: ein Diagramm der Kennlinie des Relaisventils,
- Figur 2: einen Schnitt durch eine erste Ausführungsform des Relaisventils,
- Figur 3: einen Schnitt durch eine zweite Ausführungsform des Relaisventils,
- Figur 4: einen Schnitt durch ein Relaisventil in einer letzten Ausführungsform und
- Figur 5: ein Diagramm der Kennlinie des Relaisventils gemäß Figur 4.

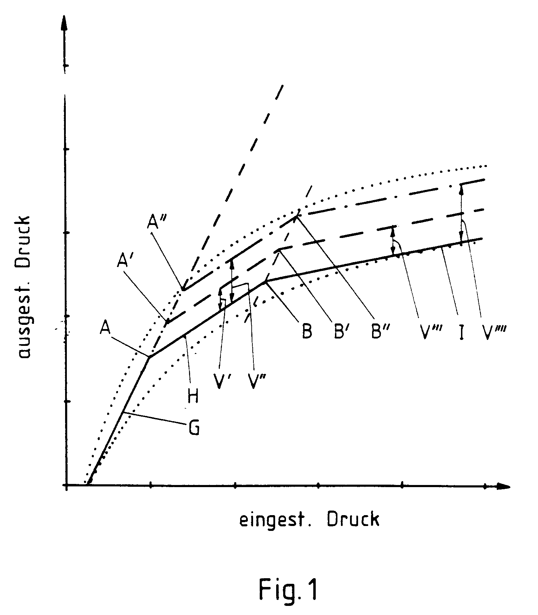

In dem in Figur 1 dargestellten Diagramm ist auf der Ordinate der ausgesteuerte Druck des Relaisventils und auf der Abszisse der eingesteuerte Druck des Relaisventils dargestellt. In durchgezogener Linienführung ist eine Kennlinie dargestellt, die die beiden Knickpunkte A und B aufweist. Eine erste Gerade G führt von der Abszisse bis zum ersten Knickpunkt A. Eine zweite, sich anschließende Gerade H führt vom ersten Knickpunkt A bis zum zweiten Knickpunkt B. Eine dritte Gerade I führt vom zweiten Knickpunkt B bis zum maximalen eingesteuerten Druck. Diese durchgezogene Kennlinie stellt zugleich die Grundeinstellung des Relaisventils dar. Unter den jeweiligen Geraden G, H und I spannen sich drei Bereiche über den eingesteuerten Druck auf, die jeweils als stufbare Bereiche ausgebildet sind, d. h. jede Gerade weist eine positive endliche Steigung auf, wobei im Sinn des Anstiegs des ausgesteuerten Drucks die Steigung von Bereich zu Bereich abnimmt.

Die beiden gepunktet dargestellten Linien schließen ein Abbremsungsband zwischen sich ein, also eine Fläche, die die Kennlinie insgesamt bei Verstellungen nicht verlassen darf und in welchem sich die Kennlinie je nach der Einstellung bewegt. Dieses Abbremsungsband besitzt eine relativ große Krümmung und ist in seinem dritten Bereich, also von dem zweiten Knickpunkt B entlang der Geraden I hinsichtlich des ausgesteuerten Drucks im Vergleich zu Kennlinien mit nur einem Knickpunkt A reduziert, um eine besondere Bremscharakteristik zu erzielen.

Beide Knickpunkte A und B können gemeinsam verstellbar und einstellbar vorgesehen sein, wobei es in der Regel genügt, auf die Relativeinstellung zueinander zu verzichten. Der Knickpunkt A wird auf der Geraden G bzw. der Verlängerung derselben verstellt, wobei sich dabei je nach dem Betrag der Verstellung die Knickpunkte A' und A'' bilden. Wenn der Knickpunkt B nicht relativ zur Verstellung des Knickpunkts A angepaßt wird, ergibt sich eine Veränderung des Knickpunkts B auf einer zur Geraden G parallelen Linie, so daß dem veränderten Knickpunkt A dann der Knickpunkt B zugeordnet ist. Ebenso gehört dann zu dem eingestellten Knickpunkt A'' der Knickpunkt B''. Man erkennt, daß in diesem Fall die Gerade H eine konstante, absolute Länge erhält, und daß die verschiedenen Geraden I relaitv große Abstände zueinander aufweisen, obwohl sie relativ flach verlaufen. Die Kennlinie bekommt in dieser Richtung einen örtlich ausgeprägten Knick mit relativ großer Änderung der Steigung in einem kleinen Bereich des eingesteuerten Drucks. Die resultierenden Voreilungen im Bereich der Geraden H und I bleiben konstant.

Um in den Bereichen der Geraden H und I bei Verstellung der Knickpunkte A und B etwa gleiche oder genau gleiche Voreilungen V zu erzielen, wird der Knickpunkt A auf der Geraden A so verstellt, wie dies durch die Folge der Knickpunkte A, A', A'' angedeutet ist. In Abstimmung darauf wird auch der zweite Knickpunkt (B) so mitverstellt, wie dies durch die Folge der Knickpunkte B, B', B'' angedeutet ist. Es ergibt sich im Bereich der Geraden H und I ein etwa übereinstimmenden Verhältnis der Voreilungen. Die Kennlinie G, A, H, B, I gibt die Grundeinstellung des neuen Relaisventils wieder. Wenn der Knickpunkt A zu A' und der Knickpunkt B zu B' verstellt werden, ergibt sich gegenüber der Kennlinie im Bereich der Geraden H die Voreilung V' und im Bereich der Geraden I die Voreilung V'''. Entsprechendes gilt für eine Verstellung der Knickpunkte A und B in A'' und B'' mit den Voreilungen V'' und V''''.

Aus Figur 1 ist auch ersichtlich, daß die Gerade G eine endliche Steigung aufweist, also der entsprechende erste Bereich gestuft ausgebildet ist. Ein senkrechtes Ansteigen der Geraden G wird vermieden.

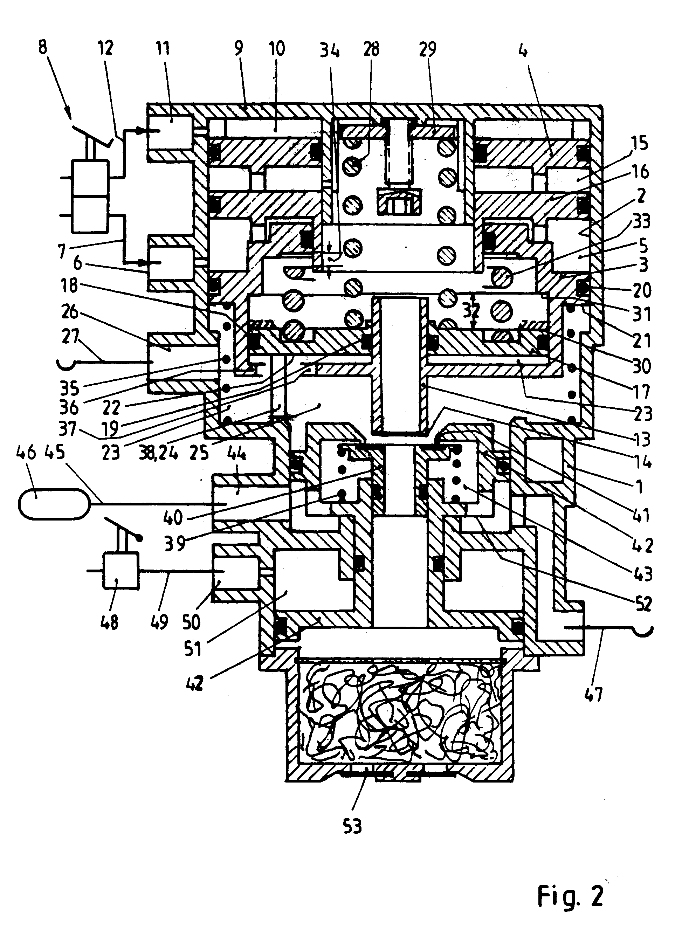

Das in Figur 2 im Schnitt dargestellte Relaisventil ist als zweikreisig ansteuerbares Anhängersteuerventil ausgebildet. Es besitzt ein Gehäuse 1, welches auch mehrteilig ausgebildet sein kann. In einem Zylinder 2 des Gehäuses 1 sind zwei Steuerkolben 3 und 4 gleitend verschiebbar gelagert. Zwischen den beiden Steuerkolben 3 und 4 ist eine Steuerkammer 5 gebildet, die in dauernder Verbindung zu einem Anschluß 6 einer Leitung 7 steht, die von einem Bremsventil 8 herangeführt ist. Ähnlich ist zwischen einem Deckel 9 des Gehäuses 1 und dem Steuerkolben 4 eine Steuerkammer 10 vorgesehen, an die über einen Anschluß 11 eine weitere Leitung 12 von dem Bremsventil 8 angeschlossen ist. Es ist ein Fortsatz 13 des Steuerkolbens 3 vorgesehen, der als getrenntes Bauteil oder auch einstückig mit dem Steuerkolben 3 ausgebildet sein kann. Der Fortsatz 13 weist an seinem unteren Ende einen Auslaßsitz 14 auf. Der Fortsatz 13 ist zu Entlüftungszwecken hohl ausgebildet.

Der hohle Fortsatz 13 erstreckt sich auch nach oben und dient der Entlüftung eines Trennraums 15 oberhalb eines Trennkolbens 16 zwischen den beiden Steuerkolben 3 und 4. Der Steuerkolben 3 ist gestuft ausgebildet und bildet eine Lauffläche für einen Rückwirkkolben 17. Der Rückwirkkolben 17 besitzt die beiden Dichtungen 18 und 19, wobei die Dichtung 18 mit dem Steuerkolben 3 zusammenarbeitet, während die Dichtung 19 die Abdichtung des Rückwirkkolbens 17 gegenüber dem hohlen Fortsatz 13 erbringt. Der Steuerkolben 3 ist mittels einer Dichtung 20 dichtend im Zylinder 2 geführt. Der Steuerkolben 3 bildet auf seiner der Steuerkammer 5 abgekehrten Seite zwischen den Dichtungen 18 und 20 eine erste Rückwirkfläche 21. Der Rückwirkkolben 17 bildet zwischen den Dichtungen 18 und 19 eine zweite Rückwirkfläche 22. Beide Rückwirkflächen 21 und 22 grenzen an einen gemeinsamen Rückwirkraum 23 an, der über eine Durchbrechung 24 im Gehäuse 1 in dauernder Verbindung zu einer Bremskammer 25 steht, von der andererseits über einen Anschluß 26 eine Bremsleitung 27 zum Kupplungskopf Bremse für den Anhänger führt.

Der Rückwirkkolben 17 ist auf einer Rückhaltefeder 28 abgestützt, die dem in dem Rückwirkraum 23 wirkenden Druck entgegenwirkt. Die Rückhaltefeder 28 ist auf einem Federteller 29 abgestützt, die sich seinerseits an dem Gehäuse 1 abstützt. Die Rückhaltefeder 28 mit und ohne Federteller 29 kann austauschbar angeordnet sein, d. h. sie kann gegen andere Rückhaltefedern 28 mit anderer Dimensionierung und insbesondere Vorspannung ausgetauscht werden, um den Knickpunkt A in Stufen zu verstellen, wie dies in Figur 1 anhand der Knickpunkte A, A', A'' angedeutet ist. Die Knickpunkte B, B' und B'' werden gemeinsam mit den Knickpunkte A, A' und A'' mitverstellt. Die Relation zwischen A und B bleibt erhalten. Der Rückwirkkolben 17 bildet mit seinem oberen Rand einen Anschlag 30, der sich dann an einen Gegenanschlag 31 an dem Steuerkolben 3 anlegt, wenn die Rückhaltefeder 28 um den konstruktiv vorgegebenen Hub 32 zusammengedrückt worden ist.

Zuvor jedoch tritt eine Übertragungsfeder 33 in Wirkfunktion Die Übertragungsfeder 33 ist koaxial zur Rückhaltefeder 28 zwischen Rückhaltekolben 17 und Steuerkolben 3 eingelegt. Sie besitzt in entspanntem Zustand eine kürzere Bauhöhe, als es dem Abstand zwischen dem Rückwirkkolben 17 und dem Steuerkolben 3 an der Anordnungsstelle der Übertragungsfeder 33 entspricht. Damit verbleibt ein Hub 34 zwischen dem oberen Ende der Übertragungsfeder 33 und dem Steuerkolben 3. Der Hub 34 ist kleiner als der Hub 32 ausgebildet. Durch gestrichelt angedeutete Beilagescheiben können die Hübe 34 und 32 ohne konstruktive Veränderung der Teile nachträglich angepaßt werden, wenn dies die besondere Anpassung an ein bestimmtes Fahrzeug erfordern sollte. Bei einer Neukonstruktion werden die Hübe 32 und 34 von vornherein aufeinander abgestimmt. Man erkennt bereits an dieser Stelle, daß sich der Rückwirkkolben 17 bei ansteigendem ausgesteuerten Druck in der Bremskammer 25 solange allein an der Rückhaltefeder 28 und damit gehäuseseitig abstützt, bis der Hub 34 zu Null geworden ist, also die Übertragungsfeder 33 sich zwischen Steuerkolben 3 und Rückwirkkolben 17 abstützt. In diesem Moment wird der Knickpunkt A erreicht und es ergibt sich eine zweite Rückwirkkraft, die dann zusätzlich zur ersten Rückwirkkraft auf den Steuerkolben 3 entgegen seiner Einsteuerrichtung auswirkt. Die Gerade H gemäß Figur 1 ist erreicht.

Mit dem nachfolgenden Anlagen des Anschlags 30 an dem Gegenanschlag 31 des Steuerkolbens 3 wird der Knickpunkt B bzw. B' oder B'' erreicht. Die Wirkung der Übertragungsfeder 33 wird gleichsam beendet, da sich der Rückwirkkolben 17 fest an den Steuerkolben 3 anlegt und die Übertragungsfeder ihre wirksame Federlänge nicht mehr verändern kann. Ab diesem Moment wirkt sich eine Erhöhung des Drucks der Druckluft im Rückwirkraum 23 und in der Bremskammer 25 im Sinn einer unmittelbaren Erhöhung der Rückwirkkraft auf den Steuerkolben 3 aus, also entgegen dem einwirkenden Steuerdruck.

Zur Realisierung einer definierten Ausgangsstellung ist der Steuerkolben 3 auf einer Rückführfeder 35 gehäuseseitig abgestützt, die im Rückwirkraum 33 angeordnet ist. Der Steuerkolben 3 besitzt einen Kolbenboden 36, der über den Umfang verteilt mit mehreren Durchbrechungen 37 versehen ist, durch die Vorsprünge 38 des Gehäuses 1 hindurchreichen, an denen sich der Rückwirkkolben 17, belastet durch die Rückhaltefeder 28, in Anlage befindet. Die Durchbrechungen 37 stellen gleichsam die direkte Verbindung zwischen den Teilen des Rückwirkraums 23 und der Bremskammer 25 her.

Die übrigen Teile des Relaisventils sind in bekannter Weise ausgebildet:
Im unteren Bereich ist auf einer Feder 39 ein Doppelventilkörper 40 federnd aufgehängt, der mit einem eingezogenen Rand 41 ein Einlaßventil 40, 41 und mit dem Auslaßsitz 40 das Auslaßventil 40, 14 bildet. Der Doppelventilkörper 40 ist in einem Kolben 42 aufgehängt, der eine Vorratskammer 43 aufweist, zu der über einen Anschluß 44 und eine Leitung 45 Druckluft aus einem Vorratsbehälter 46 jederzeit nachströmen kann. An die Vorratskammer 43 ist auch eine Vorratsleitung 47 angeschlossen, die zum Kupplungskopf Vorrat für den Anhänger führt. Im übrigen ist der Kolben 42 in bekannter Weise als Notbremskolben ausgebildet. Zu diesem Zweck führt von einem Handbremsventil 48 eine Leitung 49 zu einem Anschluß 50 und von dort in eine Notbremskammer 51. Der Kolben 42 ist andererseits auf einer Wirkfläche 52 vom Vorratsdruck belastet, die eine Notbremsfeder ersetzt. Im unteren Bereich des Gehäuses 1 ist eine Entlüftungsöffnung 53 vorgesehen.

Die Funktion des Relaisventils ist folgende:
Bei Betätigung des Bremsventils 8 gelangt Steuerluft einerseits in die Steuerkammer 5 und damit auf den Steuerkolben 3 und über den zweiten Kreis in die Steuerkammer 10 und damit auf den Steuerkolben 4, so daß beide Steuerkolben 3 und 4 eine nach unten gerichtete Bewegung ausführen und dabei den Fortsatz 13 mitnehmen. Das Auslaßventil 40, 14 wird geschlossen und anschließend das Einlaßventil 40, 41 geöffnet, so daß Druckluft aus der Vorratskammer 43 in die Bremskammer 25 überströmen kann. Diese Druckluft wird in die Bremsleitung 27 ausgesteuert und gelangt gleichzeitig auch in den Rückwirkraum 23. Der ausgesteuerte Druck vermag sich jedoch lediglich an der ersten Rückwirkfläche 21 in einer auf den Steuerkolben 3 und damit auch auf den Steuerkolben 4 einwirkenden Rückwirkkraft zu äußern, während infolge der Vorspannung der Rückhaltefeder 28 entsprechende Rückwirkkräfte von der Rückwirkfläche 22 nicht auf den Steuerkolben 3 und den Steuerkolben 4 gelangen. Es ergibt sich damit ein erster Bereich der Kennlinie, der durch die Gerade G (Figur 1) gekennzeichnet ist. Dieser Bereich ist stufbar ausgebildet, d. h. jede Erhöhung oder Erniedrigung des eingesteuerten Drucks führt zu einer entsprechenden Veränderung des ausgesteuerten Drucks. Im Verlauf des Anstiegs des eingesteuerten Drucks und entsprechend des ausgesteuerten Drucks in diesem ersten Bereich entsprechend der Geraden G wird auch die Rückhaltefeder 28 zunehmend zusammengedrückt, bis mit Erreichen des Knickpunkts A der Hub 34 zu Null aufgezehrt ist und die Übertragungsfeder 33 infolge und gemäß ihrer Zusammendrückung zwischen Steuerkolben 3 und Rückwirkkolben 17 zusätzlich Rückwirkkraft auf den Steuerkolben 3 überträgt. Ab diesem Knickpunkt A addiert sich zu der über die erste Rückwirkfläche 21 einwirkenden Rückwirkkraft eine zweite, über die zweite Rückwirkfläche 22 einwirkende Rückwirkkraft auf den Steuerkolen 3 und damit auch auf den Steuerkolben 4, so daß die Kennlinie im Bereich der sich an den Knickpunkt A nun anschließenden Gerade H eine andere (verminderte) Steigung aufweist. Auch dieser zweite Bereich der Kennlinie unterhalb der Geraden H ist stufbar ausgebildet. Schließlich werden auch gegen Ende des der Geraden H zugeordneten Bereichs die Rückhaltefeder 28 und die Übertragungsfeder 33 zunehmend zusammengedrückt (bei weiter ansteigendem Steuerdruck), so daß letztlich der Rückwirkkolben 17 an seinem Anschlag 30 an dem Gegenanschlag 31 zur Anlage kommt. Mit Erreichen des Gegenanschlags 31 wird der Knickpunkt B erreicht. Bei weiter ansteigendem Steuerdruck bleibt die über die Übertragungsfeder 33 einwirkende Rückwirkkraft konstant und die aus der Druckerhöhung resultierende Erhöhung der Kraft ergibt unmittelbar eine höhere Rückwirkkraft im Steuerkolben 3. Dies führt dazu, daß ausgehend von dem Knickpunkt B bei steigenden Steuerdrücken die Kennlinie eine dritte Gerade I aufweist, deren Steigung nochmals gegenüber der Steigung der Geraden H reduziert ist. Damit wird sichergestellt, daß auch beim Kuppeln von Zugfahrzeugen mit relativ hohen Steuerdrücken Anhänger genutzt werden können, zu denen nur ein vergleichsweise zurückgenommener, niedriger Bremsdruck im Bereich hoher Steuerdrücke ausgesteuert werden darf.

Die Einstellung bzw. Veränderung der Kennlinie des Relaisventils gemäß Figur 2 auf den jeweiligen Anwendungsfall erfolgt derart, daß zunächst die den Knickpunkt A bestimmende Rückhaltefeder 28 ausgetauscht bzw. eingesetzt wird und anschließend der Hub 32 durch Beilagescheiben so eingestellt oder konstruktiv gewählt wird, daß sich der zugeordnete Knickpunkt B ergibt. Wird nur der Federteller 29 verstellt, ergibt sich eine gekoppelte Verstellung der Knickpunkte A und B unter Beibehaltung der Länge der Geraden H.

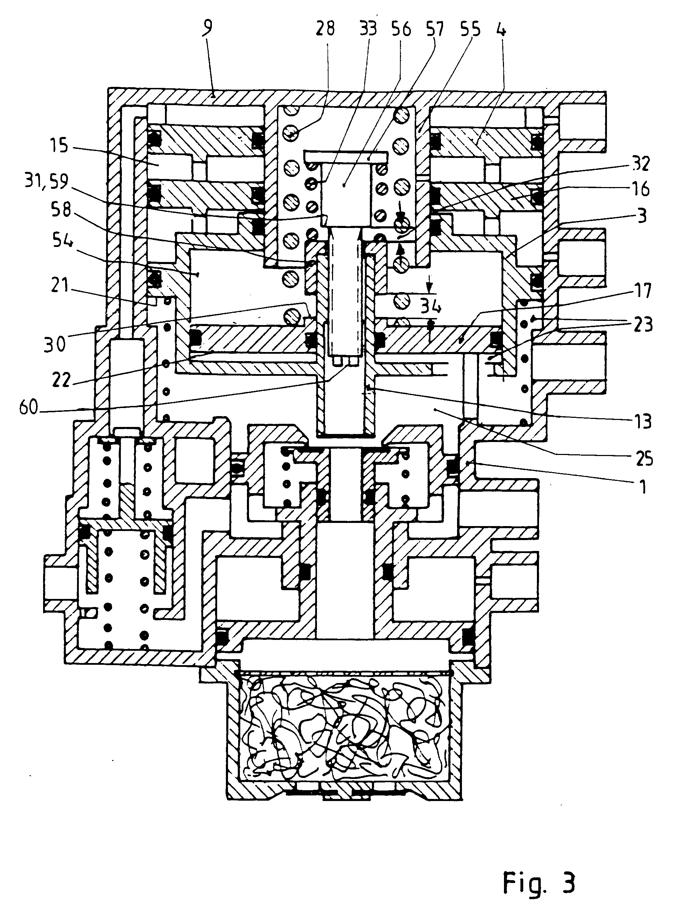

Die Ausführungsform des Relaisventils gemäß Figur 3 stimmt in weiten Bereichen mit derjenigen nach Figur 2 überein. Der Federteller 29 ist jedoch hier in Fortfall gekommen, so daß die Rückhaltefeder 28 in ihrer Kraft nicht einstellbar ausgebildet ist. Die Kraft der Rückhaltefeder 28 muß deshalb konstruktiv bemessen sein. Selbstverständlich kann auch in diesem Fall die Rückhaltefeder 28 gegen eine andere Rückhaltefeder austauschbar sein.

Die Übertragungsfeder 33 ist hier koaxial und innerhalb der Rückhaltefeder 28 angeordnet. Der Fortsatz 13 ragt hier vergleichsweise höher in einen Federraum 54 hinein, der sich auch durch die hohl ausgebildeten Steuerkolben 3 und 4 hindurch erstreckt und es letztlich - ebenso, wie bei dem Ausführungsbeispiel der Figur 2 - ermöglicht, daß die Rückhaltefeder 28 in einfacher Weise oben am Gehäuse 1 gehäuseseitig abgestützt ist. Da der Federraum 54 über den hohlen Fortsatz 13 immer an die Atmosphäre angeschlossen ist, dient der Federraum 54 auch dem gleichzeitigen Anschluß des Trennraums 15 an die Atmosphäre, so daß sich Undichtigkeiten an den Dichtungen der Steuerkolben 3 nicht in einer Vermischung der Steuerkreise äußern können. Die Steuerkolben 3 und 4 sowie der Trennkolben 16 sind hier auf einem hülsenförmigen Fortsatz 55 des Deckels 9 des Gehäuses 1 dichtend geführt.

In dem hohlen Fortsatz 13 ist ein schraubenförmiges Teil 56 über ein Gewinde verstellbar angeordnet, an dessen Kopf 57 sich die vorspannungslos eingebaute Übertragungsfeder 33 abstützen kann. Das andere Ende der Übertragungsfeder 33 liegt an einem kappenartig durchbrochenen Teil 58 an, welches sich an dem oberen Ende des Fortsatzes 13 lose abstützt. Relativ dazu besitzt der Rückwirkkolben 17 auch hier den Anschlag 30, während der zugehörige Gegenanschlag 31 von einem Bund 59 gebildet wird. Zwischen den Anschlägen 30 und 31 ist auch hier der Hub 32 vorgesehen, der sich aus der Summe der Hübe 32' und 34 zusammensetzt. Zwischen dem oberen Ende des Teils 58 und einem Bund 59 an dem schraubenförmigen Teil 56 ergibt sich der Hub 32' als Teil des Hubs 32 der Ausführungsform gemäß Figur 2, der den Hub 34 übersteigt. Das Teil 56 besitzt an seinem unteren Ende eine Ansatzfläche 60 für den Angriff eines Verdrehwerkzeugs, insbesondere eines Schraubenziehers, so daß damit das Teil 56 relativ zu dem Fortsatz 13 verdrehbar ist. Auch bei dieser Verstellung werden die Knickpunkte A und B gemeinsam verstellt, wobei eine feste Relation zwischen den Knickpunkten A und B eingehalten wird. Es sind damit Verstellungen möglich, wie dies anhand von Figur 1 verdeutlicht ist.

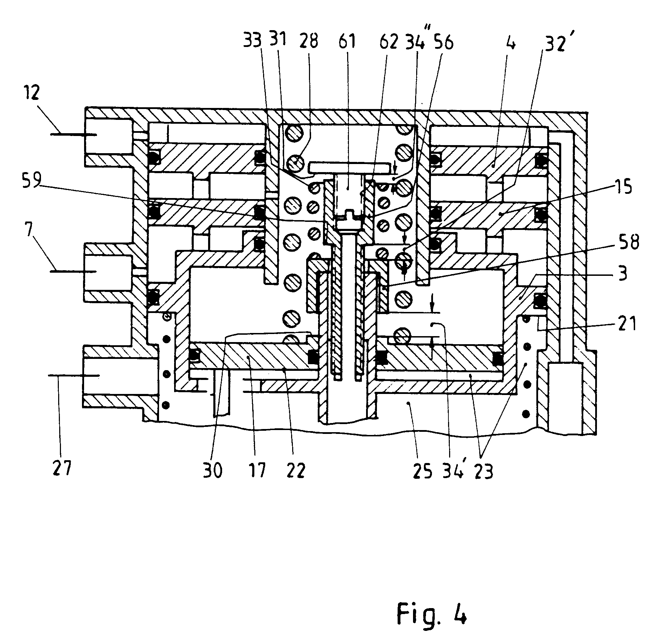

Das Ausführungsbeispiel der Figur 4 baut auf demjenigen der Figur 3 auf. Der schraubenförmige Teil 56 ist hier noch einmal unterteilt, indem zusätzlich eine Verstellschraube 61 vorgesehen ist, die über ein Gewinde 62 relativ zum Teil 56 verdrehbar ist. Zu diesem Zweck und zum Erreichen des unteren Endes der Verstellschraube 61 ist der Teil 56 hohl ausgebildet. Der Teil 56 ist dabei nach wie vor im Fortsatz 13 verstellbar vorgesehen. Der Hub 34 setzt sich aus den Teilhüben 34' und 34'' zusammen. In der Summe der Hübe 34', 34'' und 32' ergibt sich funktionsmäßig der Hub 32.

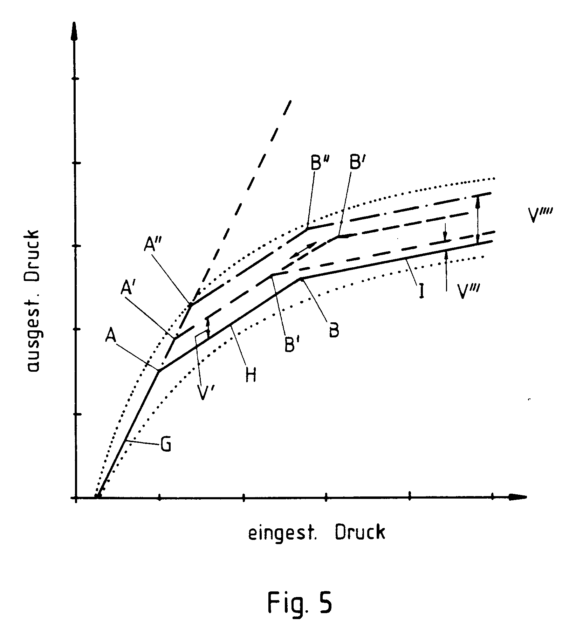

Mit dieser doppelten Verstellmöglichkeit ergeben sich die Möglichkeiten, die in Figur 5 angedeutet sind: der Knickpunkt B kann unabhängig von dem Knickpunkt A verstellt werden, so daß einem einzigen Knickpunkt A mehrere Knickpunkte B zugeordnet sein können. Dies ergibt sich die Möglichkeit, unterschiedliche Voreilungen im Bereich der Geraden H und I zu wählen. Der Knickpunkt B' kann also bei festgehaltenem Knickpunkt A' in der durch den Doppelpfeil angedeuteten Richtung verschoben werden, womit sich auch die Voreilung V''' gegenüber der konstanten Voreilung V' bei der Einstellung ändert.

### BEZUGSZEICHENLISTE

- 1 =: Gehäuse
- 2 =: Zylinder
- 3 =: Steuerkolben
- 4 =: Steuerkolben
- 5 =: Steuerkammer
- 6 =: Anschluß
- 7 =: Leitung
- 8 =: Bremsventil
- 9 =: Deckel
- 10 =: Steuerkammer
- 11 =: Anschluß
- 12 =: Leitung
- 13 =: Fortsatz
- 14 =: Auslaßventil
- 15 =: Trennraum
- 16 =: Trennkolben
- 17 =: Rückwirkkolben
- 18 =: Dichtung
- 19 =: Dichtung
- 20 =: Dichtung
- 21 =: Rückwirkfläche
- 22 =: Rückwirkfläche
- 23 =: Rückwirkraum
- 24 =: Durchbrechung
- 25 =: Bremskammer
- 26 =: Anschluß
- 27 =: Bremsleitung
- 28 =: Rückhaltefeder
- 29 =: Federteller
- 30 =: Anschlag
- 31 =: Gegenanschlag
- 32 =: Hub
- 33 =: Übertragungsfeder
- 34 =: Hub
- 35 =: Rückführfeder
- 36 =: Kolbenboden
- 37 =: Durchbrechungen
- 38 =: Vorsprung
- 39 =: Feder
- 40 =: Doppelventilkörper
- 41 =: Rand
- 42 =: Kolben
- 43 =: Vorratskammer
- 44 =: Anschluß
- 45 =: Leitung
- 46 =: Vorratsbehälter
- 47 =: Vorratsleitung
- 48 =: Handbremsventil
- 49 =: Leitung
- 50 =: Anschluß
- 51 =: Notbremskammer
- 52 =: Wirkfläche
- 53 =: Entlüfungsöffnung
- 54 =: Federraum
- 55 =: Fortsatz
- 56 =: Teil
- 57 =: Kopf
- 58 =: Teil
- 59 =: Bund
- 60 =: Ansatzfläche
- 61 =: Verstellschraube
- 62 =: Gewinde

## Patentansprüche

1. Mindestens einkreisig ansteuerbares, als Anhängersteuer- oder Anhängerbremsventil einsetzbares Relaisventil, insbesondere für Druckluftbremsanlagen an Kraftfahrzeugen, mit mindestens einem Steuerkolben (4) und einer daran oder an einem separaten Kolben angeordneten ersten, eine erste Rückwirkkraft auf den Steuerkolben (3) bereitstellenden Rückwirkfläche (21), auf die der ausgesteuerte Druck der Bremskammer (25) einwirkt, mit einer zweiten, an einem Rückwirkkolben (17) angeordneten Rückwirkfläche (22), der zur Bereitstellung eines ersten Knickpunkts der Kennlinie des Relaisventils eine gehäuseseitig abgestützte Rückhaltefeder (28) zugeordnet ist, wobei zwischen Steuerkolben (3) und Rückwirkkolben (17) einen Hub (32) gestattende mechanische Anschläge (30, 31) vorgesehen sind, dadurch gekennzeichnet, daß zur Bereitstellung eines zweiten Knickpunkts (B) der Kennlinie des Relaisventils der zweiten Rückwirkfläche (22) zugeordnet eine Übertragungsfeder (33) zwischen Steuerkolben (3) und Rückwirkkolben (17) vorgesehen ist, die sich erst mit Erreichen des ersten Knickpunkts (A) an dem Steuerkolben (3) abstützt und deren Zusammendrückung durch das Aufeinandertreffen der Anschläge (30, 31) begrenzt ist.

2. Relaisventil nach Anspruch 1, dadurch gekennzeichnet, daß die Rückhaltefeder (28) und/oder die Übertragungsfeder (33) austauschbar oder in ihrer Vorspannkraft einstellbar ausgebildet sind.

3. Relaisventil nach Anspruch 1, dadurch gekennzeichnet, daß der Rückwirkkolben (17) im Steuerkolben (3) begrenzt verschiebbar gelagert und dichtend geführt ist, daß der Steuerkolben (3) einen durchbrochenen Kolbenboden (36) aufweist, an dem ein den Auslaßsitz (14) tragender hohler Fortsatz (13) vorgesehen ist.

4. Relaisventil nach Anspruch 3, dadurch gekennzeichnet, daß der Rückwirkkolben (17) über den durchbrochenen Kolbenboden (36) des Steuerkolbens (3) gehäuseseitig abgestützt ist.

5. Relaisventil nach einem oder mehreren der Ansprüche 1 bis 4, dadurch gekennzeichnet, daß die Übertragungsfeder (33) lose zwischen Steuerkolben (3)und Rückwirkkolben (17) eingelegt ist.

6. Relaisventil nach einem oder mehreren der Ansprüche 1 bis 5, dadurch gekennzeichnet, daß der oder die Steuerkolben (3, 4) und der Rückwirkkolben (17) als Hohlkolben ausgebildet sind.

7. Relaisventil nach einem oder mehreren der Ansprüche 1 bis 4, dadurch gekennzeichnet, daß die Übertragungsfeder (33) zwischen zwei Teilen (56, 58) des Steuerkolbens (3) vorgesehen ist und der eine bewegliche Teil (58) einen Gegenanschlag (31) für einen einen Hub (32) gestattenden Anschlag (30) des Rückwirkkolbens (17) bildet.

8. Relaisventil nach einem oder mehreren der Ansprüche 1 bis 7, dadurch gekennzeichnet, daß das eine Federauflager der Übertragungsfeder (33) vorspannungslos verstellbar ausgebildet ist.

9. Relaisventil nach einem oder mehreren der Ansprüche 1 bis 8, dadurch gekennzeichnet, daß der Hub (32) zwischen den mechanischen Anschlägen (30, 31) verstellbar ausgebildet ist.

10. Relaisventil nach einem oder mehreren der Ansprüche 1 bis 9, dadurch gekennzeichnet, daß die Rückhaltefeder (28) und die Übertragungsfeder (33) koaxial angeordnet sind.

## Claims

1. Relay valve usable as a trailor control or trailor brake valve and controlable by at least one control line, especially for pneumatic vehicle brake systems, comprising at least one control piston (4), a first reaction surface (21) generating a first reaction force to the control piston (3) and being arranged thereon or on a separate piston, the reaction surface being under the action of the output pressure in the brake chamber (25), and a second reaction surface (22) being located on a reaction piston (17) and to which a storage spring (28) supported on the housing is assigned in order to provide a first salient point (A) of the characteristic curve of the relay valve, whereby mechanical stops (30, 31) are formed between the control piston (3) and the reaction piston (17) providing a stroke (32), **wherein** a transmission spring (33) assigned to the second reaction surface (22) is located between the control piston (3) and the reaction piston (17) in order to provide a second salient point (B), the transmission spring (33) contacting the control piston (3) only with the reaching of the first salient point (A) and the compressibility of which is limited by the contacting of the stops (30, 31).

2. The relay valve of claim 1, **wherein** the storage spring (28) and/or the transmission spring (33) is replaceably or adjustably arranged with respect to its prestressing.

3. The relay valve of claim 1, **wherein** the reaction piston (17) is displaceably located with a limited stroke and sealingly guided in the control piston (3), the control piston (3) comprises a wall (36) being provided with openings and being equipped with a hollow extension (13) forming the outlet seat (14).

4. The relay valve of claim 3, **wherein** the reaction piston (17) is supported by the housing through the openings in the wall (36).

5. The relay valve of one or more of the claims 1 to 4, **wherein** the transmission spring (33) is loosely arranged between the control piston (3) and the reaction piston (17).

6. The relay valve of one or more of the claims 1 to 5, **wherein** the control piston or the control pistons (3, 4) and the reaction piston (17) are provided as hollow pistons.

7. The relay valve of one or more of the claims 1 to 4, **wherein** the transmission spring (33) is located between two parts (56, 58) of the control piston (3) and the one movable part (58) forms a counter stop (31) with respect to a stop (30) on the reaction piston (17) limiting the stroke (32).

8. The relay valve of one or more of the claims 1 to 7, **wherein** the one supporting bearing of the transmission spring (33) is adjustable without prestressing.

9. The relay valve of one or more of the claims 1 to 8, **wherein** the stroke (32) between the mechanical stops (30, 31) is adjustable.

10. The relay valve of one or more of the claims 1 to 9, **wherein** the storage spring (28) and the transmission spring (33) are located coaxially.

## Revendications

1. Soupape relais commandable au moins en un circuit unique, utilisable comme soupape de commande de remorque ou soupape de freinage de remorque, en particulier pour systèmes pneumatiques de freinage de véhicule automobile, comportant au moins un piston de commande (4) et une première surface de réaction (21) placée sur ce piston ou sur au moins un piston séparé, préparant une première force de réaction sur le piston de commande (3), surface sur laquelle agit la pression de commande de sortie de la chambre de freinage (25), comportant une deuxième surface de réaction (22), placée sur un piston de réaction (17), à laquelle est associé un ressort de rappel (28) soutenu côte boîtier, pour la préparation d'un premier point d'inflexion de la courbe caractéristique de la soupape relais, des butées mécaniques (30, 31), autorisant une course (32), étant prévues entre le piston de commande (3) et le piston de réaction (17), caractérisée en ce que pour la préparation d'un deuxième point d'inflexion (B) de la courbe caractéristique de la soupape relais, il est prévu, associé à la deuxième surface de réaction (22), un ressort de transmission (33) entre le piston de commande (3) et le piston de réaction (17), qui prend appui contre le piston de commande (3), seulement lorsqu'est atteint le premier point d'inflexion (A) et la dont la compression est limitée par la rencontre des butées (30, 31).

2. Soupape relais selon la revendication 1, caractérisée en ce que le ressort de rappel (28) et/ou le ressort de transmission (33) sont échangeables ou réglables dans leur force de précontrainte.

3. Soupape relais selon la revendication 1, caractérisée en ce que le piston de réaction (17) est monté coulissant de manière limitée dans le piston de commande (3) et est guidé de manière étanche, en ce que le piston de commande (3) présente un fond de piston (36) percé sur lequel est prévu un prolongement creux (13), portant le siège d'échappement (14).

4. Soupape relais selon la revendication 3, caractérisée en ce que le piston de réaction (17) est soutenu côté boîtier par le fond de piston (36) percé du piston de commande (3).

5. Soupape relais selon une ou plusieurs des revendications 1 à 4, caractérisée en ce que le ressort de transmission (33) est placé libre entre le piston de commande (3) et le piston de commande (17).

6. Soupape relais selon une ou plusieurs des revendications 1 à 5, caractérisée en ce que le ou les pistons de commande (3, 4) et le piston de réaction (17) sont des pistons creux.

7. Soupape relais selon une ou plusieurs des revendications 1 à 4, caractérisée en ce que le ressort de transmission (33) est prévu entre deux parties (56, 58) du piston de commande (3) et une partie mobile (58) forme une contre-butée (31) pour une butée (30), autorisant une course (32), du piston de réaction (17).

8. Soupape relais selon une ou plusieurs des revendications 1 à 7, caractérisée en ce qu'un appui du ressort de transmission (33) est réglable sans précontrainte.

9. Soupape relais selon une ou plusieurs des revendications 1 à 8, caractérisée en ce que la course (32) entre les butées mécaniques (30, 31) est réglable.

10. Soupape relais selon une ou plusieurs des revendications 1 à 9, caractérisée en ce que le ressort de rappel (28) et le ressort de transmission (33) sont coaxiaux.
